**Europäisches Patentamt**

(19) **European Patent Office**

**Office européen des brevets**

(11) Publication number : **0 310 649 B1**

(12) **EUROPEAN PATENT SPECIFICATION**

(45) Date of publication of patent specification :
30.09.92 Bulletin 92/40

(51) Int. Cl.⁵ : **G01N 1/28,** G01N 35/08,
B01F 3/08, B01F 13/00

(21) Application number : **88903679.4**

(22) Date of filing : **31.03.88**

(86) International application number :
**PCT/US88/01046**

(87) International publication number :
**WO 88/07668 06.10.88 Gazette 88/22**

(54) **DEVICE FOR DILUTING AND MIXING LIQUIDS AND APPLICATIONS FOR KINETIC ANALYSIS.**

(30) Priority : **01.04.87 US 32546**

(43) Date of publication of application :
**12.04.89 Bulletin 89/15**

(45) Publication of the grant of the patent :
**30.09.92 Bulletin 92/40**

(84) Designated Contracting States :
**DE FR GB IT**

(56) References cited :
**EP-A- 0 019 579
FR-A- 2 247 276
US-A- 3 615 241
US-A- 3 698 870
US-A- 4 002 269
US-A- 4 095 472**

(73) Proprietor : **BECKMAN INSTRUMENTS, INC.
2500 Harbor Boulevard
Fullerton, CA 92634 (US)**

(72) Inventor : **HOLMQUIST, Barton
335 Prospect Hill Road
Waltham, MA 02154 (US)**
Inventor : **SCOPES, Robert, K.
Lot 36 Flat Rock Road
Hurstbridge, VIC 3099 (AU)**

(74) Representative : **Ede, Eric et al
Fitzpatricks 4 West Regent Street
Glasgow G2 1RS (GB)**

# Description

## Field of the Invention

This invention relates to a device that quickly, accurately and reproducibly dilutes and mixes two or more solutions to provide incremental concentrations that can be analyzed by any appropriate analyzer.

In a preferred embodiment, this invention relates to a device which is capable of reproducibly mixing one reactant, such as an enzyme, with successively increasing concentrations of another (selected) reactant, so as to produce a series of reacting solutions varying only in the concentration of the selected reactant. The series of reacting solutions so produced can then be monitored to obtain kinetic data on the reaction. The invention further relates to an automated system comprising: the device connected to a stepping motor so as to rapidly produce a series of solutions varying only in the concentration of the selected reactant. The device can be optionally connected to a diode array spectrophotometer capable of simultaneously measuring the rate of reaction at one wavelength and the initial concentration of the selected reactant at another wavelength.

The device is useful because it provides a means for rapidly, accurately and reproducibly obtaining data on chemical, biochemical, and physical chemical reactions in solution.

## Description of Related Art

The characterization of an enzyme by its Michaelis-Menten constant (Km), its turnover rate ($V_{max}$) and its affinity constant (Ka) for activator and inhibitors is a labour intensive and tedious process. It typically requires the initial preparation of two or more master solutions. One of the master solutions, containing the selected reactant, is manually diluted down to produce a series of solutions varying in the concentration of the selected reactant. The appropriate solutions are then manually combined, mixed and introduced into a spectrophotometer to obtain a series of raw data from which the constants can be calculated. The preparation of the multiple dilutions, the manual combining and mixing of solutions, and the subsequent introduction of the combined solutions into a spectrophotometer is not only laborious but the number of manual steps involved makes the process subject to error as well.

It is the object of the present invention to provide a device capable of diluting a selected reactant and of combining and mixing the selected reactant with one or more reactants; said device being connected to a means for introducing the combined solution into an analyzer, such as a spectrophotometer, for monitoring and/or analysis. The overall invention thereby saving both time and labour.

Included among the prior art mixing devices are the gradient producing devices employed in high pressure liquid chromatography. Such devices produce a continually changing solution of eluent by mixing two solvents whereby the percent concentration of both solvents is slowly and gradually changed over time.

The present invention differs from the prior art gradient device in that the present invention is not directed toward gradually producing minute changes in the preparation of both solvents over time. Rather, the present invention is directed toward rapidly producing significant incremental changes in the concentration of a single selected reactant while keeping the concentrations of all other reactants constant.

The prior art mixing of an enzyme solution with its substrate includes devices which gently bubble a gas through a solution into which enzyme and/or substrate solutions have been added. An additional prior art mixing device teaches the mixing of a converged stream of flowing enzyme and substrate by causing the converged stream to flow in a long coil along a horizontal axis wherein segments of the flowing stream are separated from another by the insertion of a gas bubble. In this latter system, mixing is primarily accomplished by employing two solutions of different densities wherein gravity pulls the more dense solution towards the bottom of a flowing stream which is continuously inverted as it passes through the horizontally axised coils.

Unlike the prior art, the present invention accomplishes the mixing of combined and flowing streams of enzyme and substrate by repeatedly diverging and reconverging the flowing streams as they pass through a plurality of diverging and converging fluid passageways. In the present system, mixing occurs as a result of the turbulence created when the divergent streams are repeatedly converged at oblique angles.

The prior art also teaches stopped flow spectrometry, a technique wherein a drive system is used to mix equal volumes of reactants to produce a plurality of solutions of a single unvarying concentration which are propelled into a cell of a spectrophotometer. This prior art device differs from the present invention in that the prior art neither permits the continuous dilution of one of the reactants so as to provide a series of solutions varying only in the concentration of a single reactant nor provides a means for obtaining kinetic data enabling the characterization of an enzyme within a short period of time. Moreover, the prior art does not suggest that such dilutions are possible.

US-A-3 615 241 relates to a pumping and metering system wherein initial mixing of two solutions occurs in a chamber which does not have a fixed volume. First and second chambers, in fluid communication via a plug valve, contain fluids under pressure of spring-loaded pistons, which fluids may be mixed by opening of said valve. The fluids mixture may be simultaneously discharged under pressure, together with a further fluid from another chamber, into distribution manifolds and thence driven under pressure from the pistons into a further chamber. This system does not permit continuous through-flow and is relatively complex.

In FR-A-2 247 276 improved mixing of fluids is obtained by splitting a line containing partially mixed fluids into two or three streams which are subsequently re-united. The turbulence, pressure and velocity changes thereby obtained improve fluid mixing.

EP-A-0 019 579 proposes a mixing apparatus which through computer controlled stepping motors acting on piston burettes enables metering of liquids into a mixing device. Automatic mixing and diluting operations in accordance with a stored program and direction of mixtures to different flow measuring cells are envisaged whereby measured data can be applied to control of individual mixing operations.

## SUMMARY OF THE INVENTION

According to this invention there is provided a continuous flow-through mixing system for producing a series of solutions with incremental changes in the concentration of at least one solution comprising,

(i) a dilution chamber which has an inlet and an outlet, and has a fixed volume to be initially completely filled with a first liquid or solution;

(ii) first driving means for introducing a specific volume of a second solution into the dilution chamber through its inlet thereby to displace the same volume of first solution through its outlet; and

(iii) mixing means providing for mixing of solutions in the dilution chamber to provide a third solution; and

(iv) means defining a plurality of passageways whereby said first driving means and said dilution chamber are connected in series to form a liquid-filled closed system such that displacement of a volume of liquid at one end of the system forces the displacement of a substantially equal volume throughout the system to deliver a solution in said series of solutions at the output end of said system.

Such a system is capable of diluting a first solution to produce a third solution, said third solution being mixed with a fourth solution to produce a unique series of combined solutions:

wherein each solution in said series of combined solutions optionally varies from all other solutions in said series in the concentration of at least one selected reactant;

and wherein each successive solution in said series optionally becomes either increasingly more concentrated or decreasingly less concentrated in said selected reactant.

Preferably the system is automated and has first driving means connected to a stepping motor so as to rapidly and reproducibly produce said series of solutions, and is preferably further connected to a suitable analyzer for obtaining chemical, biochemical, or physical chemical data on said series of solutions.

Preferably also said first driving means acts in a pulselike manner to propel into said dilution chamber a second solution, displacing out of said dilution chamber an equal volume of a third solution containing a selected reactant, which is propelled to the point of its convergence with a like propelled fourth solution containing an undiluted second reactant, forming a combined solution, said combined solution continuing through said passageways, and ultimately into an analyzers. Thus

said dilution chamber receives with each pulse of said driving means said second solution and produces with each pulse a substantially equal volume of a third solution containing said selected reactant, said third solution becoming increasingly more concentrated or decreasingly less concentrated in said selected reactant with each pulse.

further mixing of said combined solution occurs in said fluid passageways in which said combined solution diverges and reconverges while flowing in response to said driving means to produce a single uniform mixed solution suitable for monitoring and/or analysis.

It is further preferred that the driving means, comprises a pair of drive syringes, attached in parallel to a stepping motor, and that the exit tube of said passageways is functionally attached to an analyzer, preferably a spectrophotometer, via a flow cell, such that with each pulse of said stepping motor, a freshly mixed solution of reactants is propelled from the mixing chamber and into the flow cell, flushing out the old solution preceding it.

Preferably also a computer program controls both the stepping motor and analyzes the data from the spectrophotometer for a preprogramed series of dilutions.

## BRIEF DESCRIPTION OF THE DRAWINGS

FIGURE 1: Schematic drawing of the diluting and mixing system for diluting a solution A to produce a solution B and for mixing solution B with a solution C to produce a combined solution D (reaction mixture), which is propelled to an analyzer means for monitoring and/or analysis.

FIGURE 2: Perspective view of the diluting and mixing system optionally containing two dilution chambers embodied therein.

FIGURE 3: Vertical cross-sectional view of the diluting and mixing system.

FIGURE 4: Honrizontal cross-sectional view of the diluting and mixing system.

BRIEF DESCRIPTION

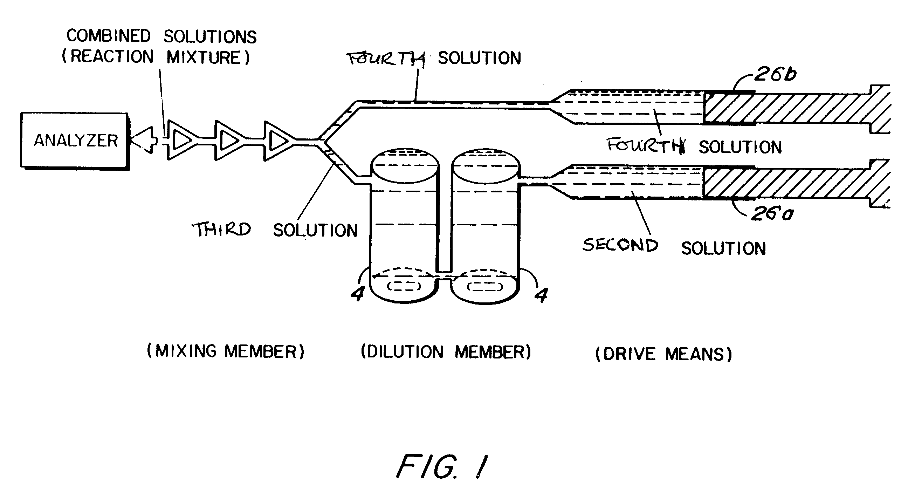

The basic principle behind the operation of the system for diluting and mixing liquids is diagrammed in FIG. 1, wherein the device is schematically divided into a driving means, a dilution chamber and mixing passageways.

In operation, the system of the present invention mixes a second Solution with a solution or diluent contained in the dilution chamber to produce a third Solution. The third Solution is eventually driven to a point of convergence with a fourth solution and the combined solutions are further driven into and out of the mixing passageways. Upon leaving the mixing passageways, the combined third and fourth Solutions have become a uniformly mixed Reaction Mixture suited for monitoring or analysis by an analyzer.

By analyzer is meant any system which is capable of analyzing said combined solutions whether electrochemically, thermometrically, fluorimetrically, spectrophotometrically, and the like or whether by nuclear magnetic resonance, electron paramagnetic resonance, circular dichroism and the like.

By producing combined solutions (reaction mixtures) in a stepwise fashion, the system is capable of producing a unique series of combined solutions wherein each solution in said series of combined solutions may optionally vary from the other solutions in the series in the concentration of at least one selected reactant. Moreover each successive solution in said series of combined solutions can become either increasingly more concentrated or decreasingly less concentrated in the selected reactant depending upon the modification of the procedure employed.

The driving means for the disclosed system preferably consists of two positive displacement devices, such as a pair of syringes, 26a and 26b. It is preferable to employ drive syringes of equal length, although their respective volumes may vary, such that both drive syringes can be easily attached to a single linear drive stepping motor.

Each of the two drive syringes contains its own respective solution within, namely the second Solution and the fourth Solution respectively. Displacement within the syringes propels the second and fourth Solutions out of the syringes and into the dilution means. Because the mixing, diluting, and driving means form a closed system, the least amount of positive displacement by the syringes propels liquid throughout the system. Accordingly, the volume of liquid propelled into the system equals the volume of liquid propelled out of the system.

Dilution of the second Solution to produce the third Solution is accomplished by a dilution means comprising 1-4 dilution chambers connected in series. Each dilution chamber is initially filled with a first solution or water and reversibly sealed at the top by a sealing means with all air spaces eliminated. Each dilution chamber is further associated with a stirring means, such as a magnetic stirring bar, to insure that each pulse of the freshly introduced concentrated solution is well mixed with diluent before being displaced as a diluted Second Solution (i.e. third solution) by the next injection of a volume of concentrated solution from the drive syringe.

Moreover, in order to insure that only a uniformly diluted Second Solution (i.e. third solution) exits the dilution chamber, it is preferable that the third Solution exit the columnar dilution chamber at or near the opposite end of the column from where the concentrated second Solution enters - such as top and bottom respectively.

With each consecutive pulse of the drive syringe (26a), the concentrated second Solution from the drive syringe enters the dilution chamber, whereas a more diluted Second Solution (i.e. third solution) exits said chamber. Hence, with each consecutive pulse of the drive syringes, there is a build up of the contents of the second Solution within the dilution chamber. Consequently, the solution within the dilution chamber, which will become the Second Solution, becomes increasingly more concentrated with each pulse.

When only a single 1ml dilution chamber is employed and when only 0.1ml of a concentrated second Solution containing the selected reactant is injected into the dilution chamber with each pulse of the driving means, then over the first nine pulses, a series of solutions is produced wherein each successive solution in the series exhibits a somewhat linear increase in the concentration of the selected reactant.

By employing two 1ml dilution chambers connected in series as in FIG. 1, a series of solutions is produced wherein each successive solution in the series exhibits a first more nearly an exponential increase in the concentration of the selected reactant but becoming more nearly linear as the concentration of the selected reactant (first solution) in the first dilution chamber approaches the concentration of the selected reactant in the incipient second Solution. Depending upon the number and volume of dilution chambers employed within the device, the device can produce a series of solutions, wherein the concentration of the selected reactant in each solution in the series increases either linearly or exponentially as desired.

It is also within the scope of the present invention to place the highly concentrated solution containing the selected reactant within one or more of the dilution chambers (4) and to substitute water or some other diluent for the second Solution. By employing this embodiment, the device can also produce a series of solutions varying only in the concentration of a single selected reactant. However, unlike the previously discussed embodiment, each successive solution in this series becomes increasingly less concentrated in the selected reactant.

As to the mixing of the converged third and fourth Solutions, the mixing is accomplished by the mixing passageways which are attached to said dilution member; and which diverge and reconverge 1-6 times, preferably 3-4 times during flow. Upon passing through said passageways, the resulting reconverged solution or Reaction Mixture is uniformly mixed and suitable for monitoring and/or analysis by any suitable analyzer.

In an especially preferred embodiment of the invention, analysis of said series of combined solutions is performed in said analyzer, preferably by way of a flow cell connected in series to the distal end of said mixing passageways. A pulse (positive displacement) by the pair of driving syringes working in parallel propels sufficient volume of the diluted selected reactant third Solution and a sufficient volume of another undiluted reactant fourth Solution to flush the old reaction mixture out of the flow cell, substituting a freshly mixed reaction mixture containing an increasingly greater concentration of the selected reactant. It is also preferable to employ a micro flow cell (8μl) so as to reduce the volumes of reactants necessary to cause flushing out of the flow cell. With an 8ul flow cell, - typically 100μl of each reactant is sufficient for flushing.

The theoretical concentrations of the selected reactant in each successive reaction mixture varies with each pulse of the driving means. However, the concentration of the selected reactant in each reaction mixture can be calculated by taking into account the selected reactants initial known concentration, the volume of the dilution chamber(s) and the volume of each pulse. Notwithstanding, it is preferable and more accurate to include an internal standard within the concentrated solution containing the selected reactant, such as an indicator dye which absorbs at a non-interfering wavelength. By monitoring the absorbance changes of the indicator dye produced upon each successive dilution, a dilution factor can be calculated and employed to accurately calculate the concentration of the correspondingly diluted selected reactant.

For instance, in a preferred operation of the system, following NAD/NADH coupled enzyme reactions, the selected reactant, whose concentration is to be varied, is a member of the group consisting of an enzyme substrate, an enzyme inhibitor, or an enzyme activator; and the second reactant is the enzyme of interest. When following such NAD/NADH coupled enzyme reactions, it is preferred to use the dye, Rhodamine B as an internal standard, since Rhodamine B has a high molar absorptivity (approximately $10^5 M^{-1}cm^{-1}$) and a sharp absorption peak (552nm) with virtually no absorbance at the NADH absorption peak (340nm).

In the NAD/NADH coupled enzyme system discussed above, it is preferable to use a diode array spectrophotometer with the disclosed system so as to monitor the reaction at or near 3 wavelengths: 340nm, 440nm, and 552nm. Readings at or near these wavelengths are recorded every 0.5 sec. over a suitable time period, which is enzyme dependent. For enzymes such as simple dehydrogenases, measurements are made every 0.5 second beginning 2-10 seconds after injection into the spectrophotometer. The enzyme's rate is calculated from measurements of $A_{340}$-$A_{440}$ where $A_{340}$ and $A_{440}$ are the absorbances at 340nm and 440 nm, respectively, whereas the concentration of the selected reactant is calculated from the mean of the measurements of $A_{552}$-$A_{440}$ where $A_{552}$ and $A_{440}$ are the absorbances at 552 and 440nm, respectively.

With the disclosed system, a 15 point kinetic run with 15 different substrate concentrations, for example, can be completed in a few minutes.

The within run precision of the device for determining both enzyme rates and substrate concentrations was excellent with the standard deviations ranging between 0.47-1.7% when the Δ A (difference in absorbance) was 0.05 in 20 seconds.

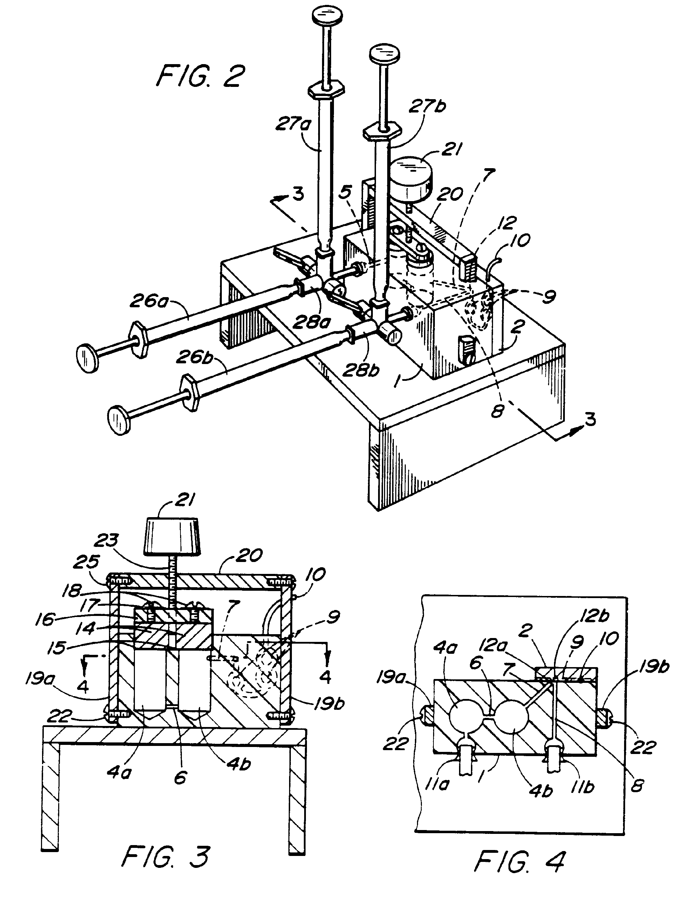

In an adaptation of the disclosed mixing system, the drive syringes (26a and 26b) are each functionally connected to the dilution block by means of a three-way valve to which a reservoir syringe is also functionally connected (FIG. 2). In this adaption, the reservoir syringes can be used to quickly refill the drive syringe by appropriately turning the three-way valve. In turn, the drive syringes can be functionally reconnected to the dilution block after an appropriate turn of the three-way valve. This adaption provides a rapid means of obtaining a large series of solutions.

In some chemical reactions, especially enzyme reactions, it is preferrable to employ a temperature other than ambient room temperature. Accordingly, in a further adaptation of the disclosed device, the temperature of the solutions within the dilution block may optionally be controlled by contacting said dilution block- to a regulatable heat exchanger means in a thermally conductive manner. Typically, the employment of a thermally conductive gel between said dilution block and said heat exchanger increases the efficacy of thermal transmission between said block and said heat exchanger.

The disclosed system can also be used to create a semi-automated system for obtaining chemical or physical chemical data on reactants. In the semi-automated system, the driving means, preferably a pair of drive syringes, are attached in parallel to a stepping motor so as to accurately and reproducibly dispense volumes of reactants, and the exit tube of the mixing passageways is functionally attached (connected in series) to a flow cell in an analyzer means, such that with each pulse of said stepping motor, a freshly mixed solution of reactants is propelled from the mixing member into the flow cell, flushing out the old solution.

A preferred embodiment of the semi-automated system is employed to obtain kinetic data spectrophotometrically on enzyme systems. In this preferred embodiment, the said flow cell mentioned above is functionally attached to a diode array spectrophotometer, capable of simultaneously monitoring said reaction of interest at one wavelength and said concentration of said selected reactant at a non-interferring wavelength by means of indicator dye in cosolution.

The above disclosed system also can be completely automated by using a computer program to control both the stepping motor and to analyze the data from any interfaceable analyzer for any preprogrammed series of dilutions.

It is a further adaption of the present invention that the second Solution and the solution in the dilution chambers (i.e. first solution) be the same solution. In this instance, the device would accurately and reproducibly produce a series of solutions which would be identical to one another.

Although the system of the present invention has been discussed on a micro scale, it is within the scope of this invention to employ the disclosed dilution and mixing techniques on a macro scale such as in the commercial production of chemical reagents, chemical products, solutions and the like.

## DESCRIPTION OF THE PREFERRED EMBODIMENT

The present invention relates to a system for diluting and mixing liquids which is capable of reproducibly mixing one reactant with successively increasing or decreasing concentrations of a selected reactant so as to produce a series of solutions varying only in the concentration of the selected reactant. This system comprises a fluid dilution chamber, fluid mixing means, and a fluid drive means and is depicted in FIGS. 2-4.

The fluid dilution chamber comprises a solid block of non-reactive material, which is preferably machinable and transparent, such as plexiglas™, into which are bored a pair of columnar dilution chambers (4) and a plurality of fluid passageways (5-8); said block being called a dilution block (1). The columnar dilution chambers within said dilution block are drilled to a 1.1cm internal diameter and then they are counterbored at the top to a larger internal diameter, such as 1.27cm, to provide a lip to hold a correspondingly sized O-ring (15), quad-ring (15) or equivalent. The dilution chambers are then reversibly sealed at the top by a sealing means which seals by compressing said O-ring or quad-ring. The two dilution chambers, namely a first dilution chamber (4a) and a second dilution chamber (4b), each may contain a stirring means within, such as a magnetic stir bar, and are each connected to 1.6mm diameter fluid passageways, namely a first and second fluid passageway, respectively. The first fluid passageway of each said dilution chamber is for an incipient stream, whereas the second fluid passageway of each said dilution chamber is for an excipient stream. The proximal end of the first dilution chamber's first fluid passageway (5) originates on an outside face of said dilution block and is functionally attached by a connector means (11a) to a fluid drive means (26a), said connector means being affixed to said dilution block. The distal end of said first dilution chamber's first fluid passageway opens into the first dilution chamber. The first dilution chamber's second fluid passageway (6) exits from said first dilution chamber and opens into the second dilution chamber (4b), thereby acting to connect both said dilution chambers in series. The second dilution chamber's second fluid passageway (7) is connected at its proximal end to said second dilution chamber (4b) from where said second fluid passageway is directed towards and converges with an independent fluid passageway (8) at a convergence point (12a), wherein said convergence point is at the distal end of both said passageways and further being at or near an outside face of said dilution block. The proximal end of the independent passageway (8) originates at an outside face of said dilution block, said outside face preferably being directly opposite the outside face associated with said independent fluid passageway's distal end; said proximal end being functionally attached to a driving means, such as a syringe (26b), by a connector means (11b), said connector means being affixed to said dilution block (1). The dilution block further has a relatively flat surface on the outside face associated with said convergence point (12a), said flat surface being suitable for affixation of a mixing member. Preferably, the surface of said dilution block associated with said convergence point is machined to match the appropriate surface of said mixing member. Typically, both said surfaces are vertical surfaces.

The fluid mixing means of the present invention comprises a solid block of non-reactive and preferably transparent material, such as plexiglas, having at least one relatively flat surface into which surface a plurality of channels (9) are cut; said block being called a mixing block (2). The plurality of channels initiate at a point selected (12b) on said flat surface not an edge and diverge and reconverge 1-6 times while extending across said face and end at an edge as a single channel. Preferably a length of the distal end of said channel is sufficiently wider than the preceding channel to accommodate affixation of an exit tube (10) in line with said distal end, said exit tube having substantially the same internal diameter as the preceeding channel (9). The flat surface of mixing block containing the plurality of fluid channels, is affixed in a leakproof manner to the flat surface of the dilution block associated with the convergence point, such that selected point (12b) of said mixing block is superimposed upon point (12a) of said dilution block, said affixation thereby converting said plurality of channels into a plurality of sealed fluid passageways through which converged solutions from fluid passageways (7) and (8) can flow and subsequently mix by diverging and reconverging 1-6 times while flowing therein.

Although the plurality of channels on the face of the mixing block ends on an edge in FIGS. 3-4 and the exit tube (10) is in the same plane as said plurality of channels (9), this is not an essential feature and it is further within the scope of the invention that said plurality of channels may end at other than an edge with an exit tube being other than in the same plane as said plurality of fluid passageways.

The fluid driving means for the present invention are preferably positive displacement devices, such as the syringes (26a) and 26b) depicted in FIGS. 3-4 and the like. The driving means is preferably automated, such as by affixing the butt end of the syringe barrels or pistons to linear drive stepping motor or to a worm drive motor, which can be computer controlled as to both volume dispensed and time before dispensing. When the driving means are syringes, such as (26a) and (26b) said syringes can be functionally connected to the dilution block (1) by luer-type connector means (11a) and (11b) respectively, said connector means being affixed to said dilution block in a substantially leakproof mamer. Preferably, between each said connector means (11a) and (11b) and each said respective drive means (26a and 26b), a three-way valve (28a) or (28b) can be connected in series, respectively; said valve further being further connected to its respective reservoir syringe (27a or 27b), which can rapidly refill said respective drive (syringes) means without detachment through said valve (FIG. 2).

The driving means for the present invention acts in a pulsewise manner to propel into said dilution means an undiluted second solution containing a selected reactant, and displacing out of said dilution means an equal volume of the diluted second solution, which is propelled to the point of its convergence with a like propelled solution containing an undiluted second reactant, forming a combined solution, said combined solution continuing with the same pulse through said fluid mixing means, and ultimately into a spectrophotometer for monitoring or analysis. The solution containing the undiluted reactant (fourth solution) is preferably propelled by a second drive means in a volume equal to that volume propelled by the first drive means.

The reversible sealing means used to seal the dilution columns (4a) or (4b) comprises the following: two columnar plug type caps (14) as shown in FIG. 2-4 which are of sufficient diameter to slide downwardly in said dilution chambers and rest their respective bottom surfaces upon said O-rings, quad-rings, or equivalent (15), said columnar caps' bottom surface being slightly convex as to completely displace any air when sealing said chambers; a pressure plate (16) resting upon the top surface of said caps, said pressure plate (16) associated with a pair of small adjustable screwlike devices (18) and a large adjustable screwlike device, said small adjustable screwlike devices threaded through said plate and positioned centrally over each said cap, each said small adjustable screwlike device further associated with a tension means (17); said large adjustable screwlike device (21) threaded through a horizontal member (20) of a three member support assembly, and adjustably positioned over said pressure plate; said support assembly further containing two vertical members (19a) and (19b) pivotally attached near their respective bottom ends to opposite sides of said dilution block by a fastener means (22), and being firmly attached at their respective top ends to opposite ends of said horizontal member by a fastener means (25); whereby when said support assembly is positioned over said pressure plate and said large adjustable screwlike device is adjusted downward, said large adjustable screwlike device contacts the top of said pressure plate and coarsely applies a downward pressure on said plate; said plate then applying pressure on said caps; the pressure on said caps being evenly adjusted by said small screwlike devices; said caps then compressing said O-rings so as to form a seal such that when said dilution chambers are pressurized by said drive means, no leakage of solution contained therein occurs.

Alternatively, said reversible sealing means used to seal the dilution chambers (4a) and (4b) could simply be a screw-type cap; the greater columnar diameter of said columnar dilution chambers being threaded in a manner to accept said threaded caps; the threaded caps having a slightly convex bottom surface such that when the threaded caps are screwed downward into a filled dilution chamber, their bottom surface displaces any air and compresses said O-rings (15), quad-rings, or the equivalent, forming a substantially leakproof seal.

## Claims

1. A flow-through mixing system for producing a series of solutions with incremental changes in the concentration of at least one solution comprising,
    (i) a dilution chamber (4) which has an inlet and an outlet, and has a fixed volume to be initially completely filled with a first liquid or solution;
    (ii) first driving means (26a) for introducing a specific volume of a second solution into the dilution chamber through its inlet thereby to displace the same volume of first solution through its outlet; and

(iii) mixing means providing for mixing of solutions in the dilution chamber to provide a third solution; and

(iv) means defining a plurality of passageways (5-7) whereby said first driving means and said dilution chamber are connected in series to form a liquid-filled closed system such that displacement of a volume of liquid at one end of the system forces the displacement of a substantially equal volume throughout the system to deliver a solution in said series of solutions at the output end of said system.

2. A mixing system according to claim 1 wherein a mixing member (9) is provided downstream of the dilution chamber to receive the third solution therefrom, and second driving means (26b) is provided for introducing a fourth solution into the mixing member for mixing with the third solution to obtain a combined solution, and said member has an outlet (10) through which said combined solution is displaced by incoming liquid flow into said member.

3. A mixing system according to claim 2 wherein the mixing member (9) comprises means defining a plurality of converging and diverging fluid passages (9) for splitting and recombining said combined solution to obtain a mixed solution for monitoring and/or analysis.

4. A mixing system according to claim 2 or claim 3 wherein first and second driving means (26a, 26b) are synchronized to control introduction of said second and fourth solutions whereby mixing of appropriate amounts of said third and fourth solutions occurs in the said mixing member to obtain a mixed solution of the desired composition.

5. A mixing system according to any one of claims 2 to 4 wherein both driving means (26a, 26b) are controlled to regulate both volume of solution and time interval between introduction of solutions into the system.

6. A mixing system according to any one of the preceding claims wherein a stepper motor is used to control the driving means.

7. A mixing system according to any one of the preceding claims wherein a computer is used to control the driving means and to analyse data obtained from an analyser connected to the system.

8. A mixing system according to any one of the preceding claims wherein solution is introduced into the system in a pulse-like manner.

9. A mixing system according to claim 2 or any preceding claim dependent upon claim 2 wherein the second driving means for introducing the fourth solution is a positive displacement device.

10. A mixing system according to any one of the preceding claims wherein each driving means is a syringe.

11. A mixing system according to any one of the preceding claims wherein the mixing means comprises a magnetic stirrer.

12. A mixing system according to any one of the preceding claims wherein a plurality of dilution chambers (4a, 4b) are connected in series.

13. A mixing system according to any one of claims 2 to 12 wherein the output (10) of the mixing member is connected in series to an analyser, and an indicator dye is included in either of the first or second solutions, the amount of said dye in the combined solution being detectable by said analyser and representative of the amount of a particular constituent present in the combined solution.

14. A mixing system according to claim 13 wherein the analyser is a spectrophotometer and said dye exhibits a measurable spectral absorption characteristic which is proportional to the amount of the said constituent.

15. A mixing system according to claim 2 or any one of the preceding claims dependent upon claim 2 wherein the first or second solution comprises a reactant selected from an enzyme substrate, an enzyme inhibitor or an enzyme co-factor, and said fourth solution comprises an enzyme.

16. A mixing system according to any one of the preceding claims wherein the dilution chamber is in thermal contact with a regulatable heat exchanger.

17. A mixing system according to claim 16 wherein the thermal contact is by way of a thermally conductive gel between said dilution chamber and said heat exchanger.

**Patentansprüche**

1. Durchfluß-Mischsystem zur Herstellung einer Reihe von Lösungen mit inkrementellen Änderungen in der Konzentration von wenigstens einer Lösung, umfassend

(i) eine Verdünnungskammer (4), welche einen Einlaß und einen Auslaß besitzt und ein zu Beginn vollständig mit einer ersten Flüssigkeit oder Lösung zu füllendes festes Volumen aufweist;

(ii) erste Antriebsmittel (26a) zum Einführen eines spezifischen Volumens einer zweiten Lösung in die Verdünnungskammer durch deren Einlaß, unter Verdrängung des gleichen Volumens der ersten Lösung durch den Auslaß der Verdünnungskammer; sowie

(iii) Durchmischungsmittel zum Durchmischen von Lösungen in der Verdünnungskammer, unter Bildung einer dritten Lösung; sowie

(iv) eine Mehrzahl von Kanälen (5-7) bildende Mittel, durch welche die genannten ersten Antriebsmittel und die genannte Verdünnungskammer in Reihe miteinander unter Bildung eines mit Flüssigkeit gefüllten geschlossenen Systems verbunden werden, derart daß Verdrängung eines Flüssigkeitsvolumens am einen Ende des Systems die Verdrängung eines im wesentlichen gleichen Volumens durch das System hindurch erzwingt, zur Abgabe einer Lösung in der genannten Reihe von Lösungen am Ausgangsende des genannten Systems.

2. Mischsystem nach Anspruch 1, bei welchem ein Mischglied (9) stromabwärts der Verdünnungskammer zur Aufnahme der dritten Lösung aus dieser vorgesehen ist und zweite Antriebsmittel (26b) vorgesehen sind, um eine vierte Lösung in das Mischglied zum Mischen mit der dritten Lösung unter Bildung einer kombinierten Lösung, einzuführen, und wobei das genannte Glied einen Auslaß (10) besitzt, durch welchen die genannte kombinierte Lösung durch in das genannte Glied eintretende flüssige Strömung verdrängt wird.

3. Mischsystem nach Anspruch 2, bei welchem das Mischglied (9) Mittel umfaßt, welche eine Mehrzahl von konvergierenden und divergierenden Strömungskanälen (9) definieren, um die genannte kombinierte Lösung aufzuspalten und zu rekombinieren, und so eine gemischte Lösung für Überwachung und/oder Analyse zu erhalten.

4. Mischsystem nach Anspruch 2 oder Anspruch 3, bei welchem erste und zweite Antriebsmittel (26a,26b) zur Steuerung der Einführung der genannten zweiten und vierten Lösungen synchronisiert sind, derart daß es zu einer Durchmischung geeigneter Mengen der genannten dritten und vierten Lösungen in dem genannten Mischglied unter Bildung einer gemischten Lösung der gewünschten Zusammensetzung kommt.

5. Mischsystem nach einem der Ansprüche 2 bis 4, bei welchem beide Antriebsmittel (26a,26b) so gesteuert sind, daß sie sowohl das Lösungsvolumen als auch das Zeitintervall zwischen der jeweiligen Einführung von Lösungen in das System regeln.

6. Mischsystem nach einem der vorhergehenden Ansprüche, bei welchem ein Schrittschaltmotor zur Steuerung der Antriebsmittel verwendet ist.

7. Mischsystem nach einem der vorhergehenden Ansprüche, bei welchem ein Computer zur Steuerung der Antriebsmittel und zur Analyse von durch einen mit dem System verbundenen Analysator erhaltenen Daten verwendet ist.

8. Mischsystem nach einem der vorhergehenden Ansprüche, bei welchem Lösung in das System in gepulster Weise eingeführt wird.

9. Mischsystem nach Anspruch 2 oder einem vorhergehenden von Anspruch 2 abhängigen Anspruch, bei welchem die zweiten Antriebsmittel zum Einführen der vierten Lösung eine Vorrichtung mit positiver Verdrängung sind.

10. Mischsystem nach einem der vorhergehenden Ansprüche, bei welchem die einzelnen Antriebsmittel jeweils eine Injektionsspritze sind.

11. Mischsystem nach einem der vorhergehenden Ansprüche, bei welchem die Mischmittel einen Magnet-Rührer umfassen.

12. Mischsystem nach einem der vorhergehenden Ansprüche, bei welchem mehrere Verdünnungskammern (4a,4b) in Reihe miteinander verbunden sind.

13. Mischsystem nach einem der Ansprüche 2 bis 12, bei welchem der Ausgang (10) des Mischgliedes in Reihe mit einem Analysator verbunden ist und entweder in der ersten oder der zweiten Lösung ein Indikatorfarbstoff enthalten ist, wobei die Menge des Farbstoffs in der kombinierten Lösung durch den genannten Analysator nachweisbar ist und repräsentativ für die Menge eines in der kombinierten Lösung vorliegenden bestimmten Bestandteils ist.

14. Mischsystem nach Anspruch 13, bei welchem der Analysator ein Spektralphotometer ist und der genannte Farbstoff eine meßbare Spektralabsorptionscharakteristik besitzt, die proportional der Menge des genannten Bestandteils ist.

15. Mischsystem nach Anspruch 2 oder einem der von Anspruch 2 abhängigen vorhergehenden Ansprüche, bei welchem die erste oder die zweite Lösung einen aus einem Enzymsubstrat, einem Enzyminhibitor oder einem Enzymkofaktor gewählten Reaktanten und die genannte vierte Lösung ein Enzym umfassen.

16. Mischsystem nach einem der vorhergehenden Ansprüche, bei welchem die Verdünnungskammer in thermischem Kontakt mit einem regelbaren Wärmeaustauscher steht.

17. Mischsystem nach Anspruch 16, bei welchem der thermische Kontakt mittels eines wärmeleitenden Gels zwischen der Verdünnungskammer und dem genannten Wärmetauscher besteht.

## Revendications

1. Système de mélange à écoulement continu pour la production d'une série de solutions avec des changements incrémentiels de la concentration d'au moins une solution comprenant
    (i) une chambre de dilution (4) qui a une entrée et une sortie et a un volume fixe devant être initialement complètement rempli d'un premier liquide ou solution ;
    (ii) un premier moyen d'entraînement (26a) pour introduire un volume spécifique d'une deuxième solution dans la chambre de dilution par son entrée et ainsi déplacer le même volume de la première solution à travers sa sortie ; et
    (iii) un moyen de mélange permettant le mélange des solutions dans la chambre de silution pour produire une troisième solution ; et
    (iv) un moyen définissant un certain nombre de passages (5-7) pour qu'ainsi ledit premier moyen d'entraînement et ladite chambre de dilution soient connectés en série pour former un système fermé rempli de liquide, tel que le déplacement d'un volume de liquide à une extrémité du système provoque le déplacement d'un volume sensiblement égal- dans tout le système pour délivrer une solution dans ladite série de solutions à l'extrémité de sortie dudit système.

2. Système de mélange selon la revendication 1 où un organe de mélange (9) est prévu en aval de la chambre de dilution pour recevoir la troisième solution, et un second moyen d'entraînement (26b) est prévu pour introduire une quatrième solution dans l'organe de mélange pour un mélange avec la troisième solution afin d'obtenir une solution combinée et ledit organe a une sortie (10) par où ladite solution combinée est déplacée par l'écoulement du liquide entrant dans ledit organe.

3. Système de mélange selon la revendication 2 où l'organe de mélange (9) comprend un moyen définissant un certain nombre de passages convergents et divergents de fluide (9) pour diviser et recombiner ladite solution combinée afin d'obtenir une solution mélangée pour surveillance et/ou analyse.

4. Système de mélange selon la revendication 2 ou la revendication 3 où les premier et second moyens d'entrainement (26a, 26b) sont synchronisés pour contrôler l'introduction desdites deuxième et quatrième solutions pour qu'ainsi un mélange de quantités appropriées desdites troisième et quatrième solutions se produise dans ledit organe de mélange afin d'obtenir une solution mélangée de la composition souhaitée.

5. Système de mélange selon l'une des revendications 2 à 4 où les deux moyens d'entraînement (26a, 26b) sont commandés pour réguler le volume de la solution et l'intervalle de temps entre l'introduction des solutions dans la système.

6. Système de mélange selon l'une quelconque des revendications précédentes où un moteur pas à pas est utilisé pour commander les moyens d'entraînement.

7. Système de mélange selon l'une quelconque des revendications précédentes où un ordinateur est utilisé pour commander les moyens d'entraînement et pour analyser les données obtenues d'un analyseur connecté au système.

8. Système de mélange selon l'une quelconque des revendications précédentes où la solution est introduite dans le système d'une manière pulsée.

9. Système de mélange selon la revendication 2 ou toute revendication précédente dépendant de la revendication 2 où le second moyen d'entraînement pour introduire la quatrième solution est un dispositif à déplacement positif.

10. Système de mélange selon l'une quelconque des revendications précédentes où chaque moyen d'entrainement est une seringue.

11. Système de mélange selon l'une quelconque des revendications précédentes où le moyen de mélange comprend un agitateur magnétique.

12. Système de mélange selon l'une quelconque des revendications précédentes où un certain nombre de chambres de dilution (4a, 4b) sont connectées en série.

13. Système de mélange selon l'une quelconque des revendications 2 à 12 où la sortie (10) de l'organe de mélange est connectée en série à un analyseur et un colorant indicateur est incorporé dans l'une des première ou deuxième solutions, la quantité dudit colorant,dans la solution combinée, étant détectable par ledit analyseur et représentative de la quantité d'un constituant particulier présent dans la solution combinée.

14. Système de mélange selon la revendication 13 où l'analyseur est un spectrophotomètre et ledit colorant présente une caractéristique d'absorption spectrale mesurable qui est proportionnelle à la quantité dudit constituant.

15. Système de mélange selon la revendication 2 ou toute revendication précédente dépendant de la revendication 2 où la première ou deuxième solution comprend un réactif choisi parmi un substrat d'enzyme, un inhibiteur d'enzyme ou un cofacteur d'enzyme et ladite quatrième solution comprend une enzyme.

16. Système de mélange selon l'une quelconque des revendications précédentes où la chambre de dilution est en contact thermique avec un échangeur de chaleur réglable.

17. Système de mélange selon la revendication 16 où le contact thermique se fait au moyen d'un gel thermiquement conducteur entre ladite chambre de dilution et ledit échangeur de chaleur.

COMBINED SOLUTIONS
(REACTION MIXTURE)

FOURTH SOLUTION

26b

ANALYZER

FOURTH SOLUTION

THIRD SOLUTION

SECOND SOLUTION

26a

4        4

(MIXING MEMBER)        (DILUTION MEMBER)        (DRIVE MEANS)

FIG. 1

EP 0 310 649 B1

EP 0 310 649 B1

FIG. 2

FIG. 3

FIG. 4

13